# FASCICULE DE BREVET EUROPEEN

(11) **EP 1 784 718 B1**
(45) Date de publication et mention de la délivrance du brevet: **03.11.2010**
(21) Numéro de dépôt: 04786246.1
(22) Date de dépôt: 02.08.2004
(51) Int. Cl.: G06F 7/58

(54) **GENERATION D'UNE SEQUENCE DE DONNEES PSEUDO ALEATOIRE**
ERZEUGUNG EINER PSEUDOZUFÄLLIGEN DATENSEQUENZ
GENERATION OF A PSEUDORANDOM DATA SEQUENCE

(43) Date de publication de la demande: 16.05.2007
(73) Titulaire: FRANCE TELECOM, 75015 Paris (FR); Université de Caen Basse Normandie, 14000 Caen (FR)
(72) Inventeur: SIBERT, Hervé, F-14000 CAEN (FR); GOUGET, Aline, F-14000 CAEN (FR)
(74) Mandataire: David, Alain
(86) Numéro de dépôt international: PCT/FR2004/002070
(87) Numéro de publication internationale: WO 2006/024705

(56) Documents cités:
- EP-A- 0 905 611
- EP-A- 1 258 799
- DE-A- 19 736 954
- [Online] 27 mars 1998 (1998-03-27), , XP002311267 Bordélisateur lexigraphique ambiant Bla.exe Extrait de l'Internet: URL:http://jlpfractware.free.fr/outils.htm > [extrait le 2004-12-17] programme (Bla.exe) crée le 27.3.1998 pages 1-5 le document en entier
- SCHNEIER B: "PSEUDO-RANDOM-SEQUENCE GENERATORS AND STREAM CIPHERS" APPLIED CRYPTOGRAPHY. PROTOCOLS, ALGORITHMS, AND SOURCE CODE IN C, NEW YORK, JOHN WILEY & SONS, US, 1996, pages 369-428, XP000619296 ISBN: 0-471-11709-9
- KNUTH, DONALD ERVIN: "The art of computer programming" 1998, ADDISON WESLEY LONGMAN , US , XP002311268 pages 1-40 le document en entier
- "Les grimoires de la Lune Rouge" , Retrieved from the Internet: URL:http://web.archive.org/web/20040311024 630/http://www.lunerouge.org/spip/article_ print.php3?id_article=365>
- "logiciels" , Retrieved from the Internet: URL:http://web.archive.org/web/20021207020 316/http://www.votresiteperso.com/logi-red action.htm>
- MENEZES; OORSCHOT; VANSTONE: "Handbook of Applied Cryptography, Chapter 5 : Pseudorandom Bits and Sequences; pages 173-175;" 1 January 1997 (1997-01-01), MENEZES A; OORSCHOT VAN P; VANSTONE S , FL, US , XP002171816
- "bla.zip" , [Online] 2 September 2000 (2000-09-02), Retrieved from the Internet: URL:http://ourworld.compuserve.com/homepag es/jlpiedanna/bla.zip> [retrieved on 2009-09-25]
- "Les grimoires de la Lune Rouge" Extrait de l'Internet: URL:http://web.archive.org/web/20040311024 630/http://www.lunerouge.org/spip/article_ print.php3?id_article=365>
- "logiciels" Extrait de l'Internet: URL:http://web.archive.org/web/20021207020 316/http://www.votresiteperso.com/logi-red action.htm>
- MENEZES; OORSCHOT; VANSTONE: "Handbook of Applied Cryptography, Chapter 5 : Pseudorandom Bits and Sequences; pages 173-175;" 1 janvier 1997 (1997-01-01), MENEZES A; OORSCHOT VAN P; VANSTONE S , FL, US , XP002171816
- "bla.zip"[Online] 2 septembre 2000 (2000-09-02), Extrait de l'Internet: URL:http://ourworld.compuserve.com/homepag es/jlpiedanna/bla.zip> [extrait le 2009-09-25]

## Description

### Domaine technique de l'invention

L'invention se rapporte au domaine du codage/décodage et concerne un système et un procédé de génération d'une séquence de données pseudo aléatoire.

L'invention trouve une application très avantageuse en ce qu'elle permet de créer des suites de bits destinées au chiffrement symétrique, pour lequel les chiffrement et déchiffrement utilisent une même clé secrète. Elle s'inscrit dans le procédé classique dit de chiffrement à flot pour lequel l'opération de chiffrement et l'opération de déchiffrement sont identiques. Le chiffrement symétrique est employé couramment dans tous les types de communications, telles que les communications mobiles (GSM, UMTS...), l'internet (SSL...), les cartes à puce (cartes bancaires), etc.

### Arrière-plan de l'invention

La méthode la plus répandue de chiffrement à flot consiste à générer une suite chiffrante de manière indépendante du message à chiffrer en faisant appel, dans un but d'économie matérielle, à des registres à décalage à rétroaction linéaire.

L'inconvénient majeur des registres à décalage à rétroaction linéaire est leur linéarité. En effet, la connaissance d'un nombre de bits de sortie du registre égal à la longueur du registre ainsi que du polynôme de rétroaction associé au registre permet de connaître les bits de sortie ainsi que tous les états ultérieurs du registre.

Aussi, afin de "casser" la linéarité des registres à décalage à rétroaction linéaire, il est d'usage de combiner la sortie de plusieurs registres, ainsi, éventuellement, que leur état interne, à l'aide d'une fonction booléenne non linéaire, par exemple.

La figure 6 montre un tel générateur 100 appelé « *shrinking generator* » décrit dans la demande de brevet européen EP 0 619 659 comportant un premier registre à décalage à rétroaction linéaire 111a, un second registre à décalage à rétroaction linéaire 111b, et un moyen 112 pour sélectionner la sortie du générateur 100.

Ainsi, à chaque décalage, les deux registres 111a et 111b sont décalés simultanément, et la sortie du dispositif 100 est égale à la sortie du deuxième registre 111b si la sortie du premier registre 111a est « 1 », sinon aucun bit n'est sorti.

Le *shrinking generator* permet de combiner non seulement les sorties de deux registres à décalage à rétroaction linéaire mais aussi, plus généralement, tout couple de suites de bits. Le *shrinking generator* fait partie d'une classe de procédés de chiffrement à flot, dans lesquels un registre à décalage à rétroaction linéaire en contrôle un autre. L'idée est de faire varier le nombre de décalages, d'une part, entre les différents registres employés et, d'autre part, entre deux bits consécutifs, afin de casser la linéarité des registres.

Une variante du *shrinking generator,* appelée « *self-shrinking generator* »*,* repose sur le même principe, mais à partir, cette fois d'un seul registre. Les bits de sortie du registre sont lus deux à deux, et le premier bit contrôle la sortie du second de sorte que la sortie du système est le second bit si le premier est « 1 », et aucun bit n'est sorti sinon.

Les inconvénients de l'emploi de registres à décalage à rétroaction linéaire seuls sont nombreux. Le principal est la faiblesse due à la linéarité du dispositif. Lorsque des registres sont combinés par une fonction booléenne, là aussi des inconvénients apparaissent. Au niveau matériel, ils proviennent de la complexité de l'implémentation de la fonction. De plus, cette fonction est fixée, et il est possible de l'attaquer.

D'autre part, des méthodes statistiques ont mis en évidence certaines faiblesses du « *shrinking generator*» et d'autres procédés de chiffrement à contrôle d'horloge. En particulier, dans le *shrinking generator,* le nombre de décalages effectués par les deux registres entre deux bits de sortie varie, mais a la même valeur pour les deux registres.

Enfin, un dernier inconvénient du *shrinking generator* est son faible rapport du nombre de bits sortis sur le nombre de bits calculés qui est égal en moyenne à 1/4. Ce rapport est le même pour le *self-shrinking generator,* qui possède la plupart des vulnérabilités du *shrinking generator.*

### Objet et résumé de l'invention

L'invention a pour but de remédier à ces inconvénients, et de simplifier la génération d'une séquence de données pseudo aléatoire de bonne qualité.

Un autre but est de proposer un procédé et un générateur permettant d'avoir un rapport entre le nombre de bits sortis et le nombre de bits calculés supérieur à 1/4.

Encore un autre but est de réaliser un générateur très efficace et peu coûteux.

Ces buts sont atteints grâce à un procédé de génération d'une séquence de données pseudo aléatoire, exécuté par un générateur de séquence de données pseudo-aléatoire, ladite séquence de données pseudo aléatoire étant utilisée comme suite chiffrante dans un procédé de chiffrement à flot et étant engendrée à partir d'une procédure de recherche d'au moins un motif de recherche d'un bit dans une séquence de données initiale de N bits, en déplaçant une fenêtre de taille un bit sur la séquence de données initiale, cette fenêtre étant placée à une position initiale déterminée. La séquence de données initiale est engendrée par un moyen comportant un registre à décalage à rétroaction linéaire.

Ainsi, le procédé selon l'invention se rapporte à un procédé non linéaire de génération de données pseudo aléatoires et basé sur la détection de motifs permettant de combiner de manière non linéaire un ou plusieurs flux de bits pour obtenir un nouveau flux de bits.

Ce procédé, tout en étant simple à réaliser comporte une complexité intrinsèque pour pouvoir produire une séquence de données pseudo aléatoire de bonne qualité.

La procédure de recherche comporte les étapes suivantes :
- mettre le bit de la fenêtre dans un motif de recherche ;
- détecter le motif de recherche dans ladite séquence de données initiale en déplaçant la fenêtre sur la séquence de données initiale ;
- déterminer un motif de sortie de k bits selon une opération qui dépend du déroulement de l'étape précédente, le motif étant déterminé :
   ○ selon une première loi, si la fenêtre est déplacée une seule fois avant de détecter le motif de recherche dans la séquence de données initiale, ladite première loi attribuant une valeur dite de sortie au motif de sortie ; et
   ○ selon une seconde loi sinon, ladite seconde loi attribuant au motif de sortie le résultat de l'addition modulo deux entre la valeur dite de sortie et la valeur 1 ;
- déplacer la fenêtre d'un bit, du bit courant au bit suivant ; et
- répéter les étapes précédentes de manière successive pour former la séquence de données pseudo aléatoire par concaténation des motifs de sortie.

Les étapes de détection dudit motif de recherche et de détermination dudit motif de sortie sont effectuées par une suite d'opérations comportant un premier ensemble de règles permettant de définir au moins un mode de déplacement pour déplacer la fenêtre sur ladite séquence de données initiale pour détecter le motif de recherche.

La suite d'opérations comporte en outre un second ensemble de règles qui déterminent les conditions d'arrêt du déplacement de la fenêtre sur ladite séquence de données initiale.

Au moins une règle dudit second ensemble de règles gère une mise à jour du motif de recherche et/ou dudit motif de sortie, en fonction du déplacement et/ou du contenu de la fenêtre.

La suite d'opérations peut être répétée jusqu'à ce qu'une condition préalablement déterminée soit remplie.

Avantageusement, la suite d'opérations est modifiée après chaque exécution.

Selon une particularité de l'invention, la suite d'opérations reste invariable après chaque exécution et elle permet au moyen de la fenêtre de 1 bit de parcourir ladite séquence de données initiale de manière continue bit à bit pour détecter un motif de recherche de 1 bit et pour déterminer un motif de sortie de 1 bit.

Selon un premier mode de réalisation de l'invention, la suite d'opérations comporte les étapes suivantes :
- mettre le bit d'une fenêtre dans le motif de recherche ;
- déplacer la fenêtre d'un bit du bit courant au bit suivant ;
- mettre à jour le motif de sortie selon une première loi, si le contenu de la fenêtre est égal à celui du motif de recherche ;
- mettre à jour le motif de sortie selon une seconde loi, si le contenu de la fenêtre n'est pas égal au bit du motif de recherche ;
- déplacer la fenêtre bit par bit vers les bits suivants tant que le contenu de la fenêtre n'est pas égal au bit du motif de recherche ;
- déplacer la fenêtre d'un bit, du bit courant au bit suivant ; et
- faire sortir le motif de sortie.

Selon le premier mode de réalisation la première loi attribue une valeur déterminée b au motif de sortie, et la seconde loi fait une addition modulo deux entre ladite valeur déterminée b et la valeur 1 et attribue le résultat de ladite addition au motif de sortie.

Selon un deuxième mode de réalisation de l'invention, la première loi fait une addition modulo deux entre une valeur déterminée b et la valeur E du motif de recherche et attribue le résultat de ladite addition au motif de sortie, et la seconde loi fait une addition modulo deux entre ladite valeur déterminée b, la valeur E du motif de recherche, et la valeur 1 et attribue le résultat de ladite addition au motif de sortie.

Selon une application du procédé de la présente invention, chaque bit de ladite séquence de données pseudo aléatoire est combiné avec un bit correspondant d'une séquence de données d'un message à chiffrer par une addition modulo 2 pour former une séquence de données chiffrée.

L'invention vise aussi un dispositif de codage comportant un générateur d'une séquence de données pseudo aléatoire ledit dispositif de codage étant adapté a réaliser un chiffrement à flot utilisant la séquence de données-pseudo- aléatoire générée comme suite chiffrante , ledit générateur comportant un moyen de recherche pour rechercher au moins un motif de recherche dans une séquence de données initiale de N bits, en déplaçant une fenêtre de taille un bit d'un moyen de détection du moyen de recherche sur la séquence de données initiale, la fenêtre étant placée à une position initiale déterminée.

Le moyen de recherche du générateur comporte en outre un moyen de détermination et un moyen de répétition et est tel que ;
- le moyen de détermination est apte à mettre le bit de la fenêtre dans un motif de recherche ;
- le moyen de détection est apte à détecter le motif de recherche dans ladite séquence de données initiale en déplaçant ladite fenêtre sur ladite séquence de données initiale ;
- le moyen de détermination est apte à déterminer un motif de sortie d'un bit selon une opération qui dépend du déroulement de la détection dudit au moins un motif de recherche, le motif de sortie étant déterminé :
   ○ selon une première loi, si la fenêtre est déplacée une seule fois avant de détecter le motif de recherche dans la séquence de données initiale, ladite première loi attribuant une valeur dite de sortie au motif de sortie ; et
   ○ selon une seconde loi sinon, ladite seconde loi attribuant au motif de sortie le résultat de l'addition modulo deux entre la valeur dite de sortie et la valeur 1 ;
- le moyen de détection est apte à déplacer la fenêtre d'un bit, du bit courant au bit suivant ; et
- le moyen de répetition est apte à générer la séquence de données pseudo aléatoire par concaténation des motifs de sortie.

Le moyen de détection comporte ladite fenêtre destinée à se déplacer sur ladite séquence de données initiale et un premier moyen de contrôle pour contrôler le déplacement de ladite fenêtre sur ladite séquence de données initiale.

Le moyen de détermination comporte un second moyen de contrôle pour mettre à jour ledit motif de recherche et/ou ledit motif de sortie.

Le générateur comporte en outre un moyen initial pour engendrer la séquence de données initiale de N bits.

Le moyen initial comporte un registre à décalage à rétroaction linéaire.

L'invention vise également un dispositif de codage comportant une porte logique ou-exclusif et un générateur selon les caractéristiques ci-dessus.

L'invention vise aussi un système sécurisé comportant au moins deux entités dont chacune comporte un dispositif de codage.

### Brève description des dessins

D'autres particularités et avantages de l'invention ressortiront à la lecture de la description faite, ci-après, à titre indicatif mais non limitatif, en référence aux dessins annexés, sur lesquels :
- la figure 1 illustre un exemple très schématique d'un générateur d'une séquence de données pseudo aléatoire, selon l'invention ;
- la figure 2 montre un système sécurisé comportant des générateurs de la figure 1 ;
- la figure 3 illustre un exemple d'une procédure de recherche pour la génération de la séquence de données pseudo aléatoire, selon l'invention ;
- les figures 4 à 5 montrent des modes de réalisation particuliers du procédé selon l'invention ; et
- la figure 6 est une vue très schématique d'un générateur selon l'art antérieur.

### Description détaillée de modes de réalisation

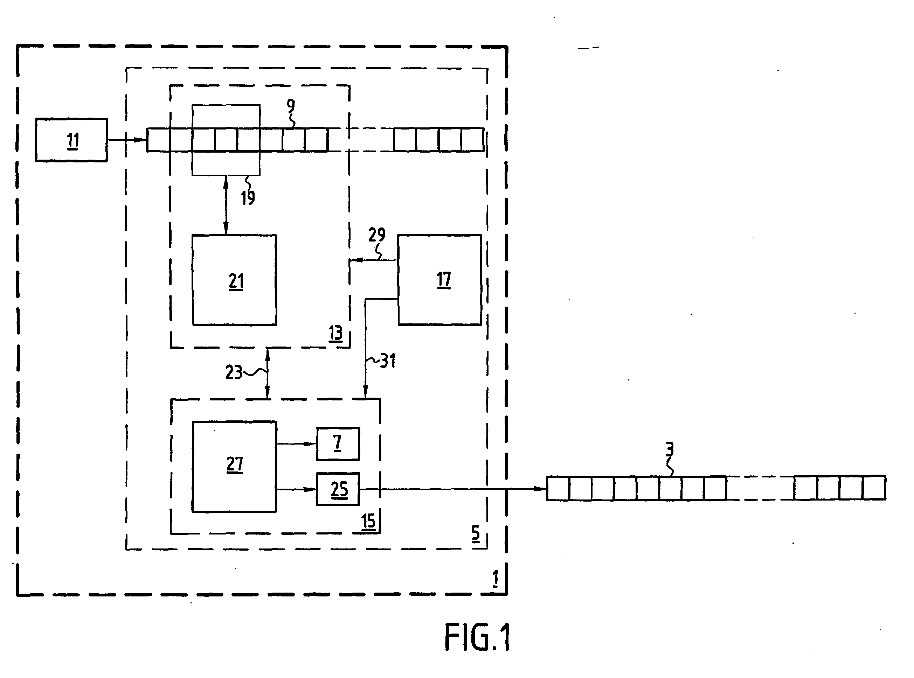

Conformément à l'invention, la figure 1 illustre un exemple très schématique d'un générateur 1 d'une séquence de données pseudo aléatoire 3.

Le générateur 1 comporte un moyen de recherche 5 pour rechercher au moins un motif de recherche 7 dans une séquence de données initiale 9 de N bits. Ce ou ces motifs de recherche figurent parmi un ensemble de motifs de recherche.

On appelle, dans tout ce qui suit, un "motif', tout mot composé uniquement de 0 et de 1. Par exemple, 0, 11, 000, 1010, 00111 sont des motifs de longueurs respectives 1, 2, 3, 4 et 5. Par ailleurs, un motif "vide" est un mot vide.

La séquence de données initiale de N bits (N étant un nombre entier) est engendrée par un moyen initial 11 qui peut comporter un registre à décalage à rétroaction linéaire de période maximale.

Un registre à décalage à rétroaction linéaire est un tableau de bits de longueur finie (le registre) muni d'une combinaison linéaire, représentée par un polynôme appelé polynôme de rétroaction des cases du tableau. A chaque décalage, le bit d'indice le plus élevé est sorti, tous les autres bits sont décalés d'un indice, et le bit d'indice le plus faible prend la valeur de la combinaison linéaire avant le décalage.

Avantageusement, le polynôme de rétroaction peut par exemple être un polynôme primitif correspondant à un registre à décalage linéaire de période maximale, ou bien un polynôme de la forme Q = (*x*² +1)*P*, avec P un polynôme primitif.

Le moyen de recherche 5 du générateur 1 comporte un moyen de détection 13, un moyen de détermination 15, et un moyen de répétition 17.

Le moyen de détection 13 est destiné à détecter au moins un motif de recherche 7 de r bits dans la séquence de données initiale, où r est égal à 1. Le moyen de détermination 15 définit l'ensemble de motifs de recherche auquel appartient le motif de recherche 7 détecté par le moyen de détection 13.

Le moyen de détection comporte une fenêtre 19 destinée à se déplacer sur la séquence de données initiale 9 et un premier moyen de contrôle 21 pour contrôler le déplacement de la 19 sur la séquence de données initiale 9.

La fenêtre 19 est placée à une position initiale déterminée sur la séquence de données initiale 9 et possède une taille déterminée de 1 bit. Par exemple, une fenêtre 19 de taille t (t étant un nombre entier inférieur à N) placée sur la séquence de données initiale 9 est un masque qui peut se déplacer sur cette séquence 9 en laissant apparaître à chaque déplacement exactement t bits de la séquence 9.

Le moyen de détermination 15 est en interaction avec le moyen de détection 13 via une liaison 23. Ce moyen de détermination 15 est destiné à déterminer un motif de sortie 25 de k bits (k étant égal à 1 ), selon une opération qui dépend du déroulement de la recherche du ou des motifs de recherche 7.

En effet, le moyen de détermination 15 comporte un second moyen de contrôle 27 pour définir ou mettre à jour l'ensemble de motifs de recherche et/ou le motif de sortie 25.

Par ailleurs, le moyen de répétition 17 est relié aux moyens de détection 13 et de détermination 15 via des liaisons 29 et 31 respectivement.

Ainsi, le moyen de répétition 17 peut échanger des signaux avec les moyens de détection 13 et de détermination 15 pour recommencer les opérations de détection et de détermination, par exemple après avoir reçu du moyen de détermination 15 le signal qu'un motif de sortie 25 vient de sortir, ceci tant qu'une condition d'arrêt préalablement déterminée n'est pas remplie. Le moyen de répétition 17 peut en outre tester la condition d'arrêt grâce aux échanges de signaux avec les moyens de détection 13 et de détermination 15. Ceci permet de générer une succession de motifs de sortie 25 qui forment par concaténation la séquence de données pseudo aléatoire 3.

On notera que le moyen de répétition 17 peut aussi être intégré au premier ou second moyen de contrôle 21 ou 27 des moyens de détection 13 et de détermination 15.

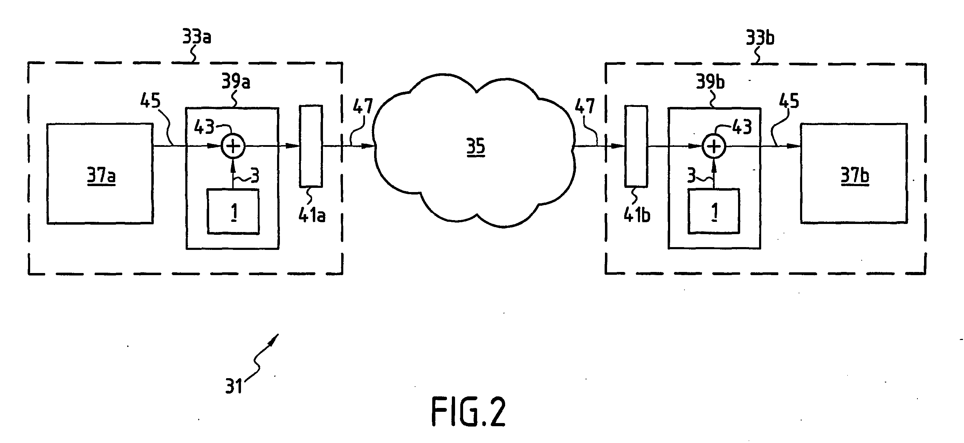

La figure 2 montre un système sécurisé 31 comportant aux moins deux entités connectées entre elles via un réseau de communication 35 de type Internet, GSM, UMTS, etc.

L'exemple de cette figure montre une première entité 33a connectée via le réseau de communication 35 à une seconde entité 33b.

La première entité 33a (respectivement la seconde entité 33b) comporte un premier terminal 37a (respectivement un second terminal 37b), un premier dispositif de codage 39a (respectivement un second dispositif de codage 39b) et un premier modem 41a (respectivement un second modem 41b), les modems 41a et 41b pouvant être tout dispositif permettant de s'interfacer au réseau de communication 35.

Chacun des premier et second dispositifs de codage 39a, 39b comporte un générateur 1 d'une séquence de données pseudo aléatoire 3 tel que décrit précédemment et une porte logique «ou-exclusif » 43.

Chaque dispositif de codage 39a, 39b est destiné à faire un chiffrement ou un déchiffrement à flot qui consiste à chiffrer ou déchiffrer un message bit après bit.

Selon cet exemple, le premier dispositif de codage 39a fait une opération de chiffrement Ainsi, la séquence de données pseudo aléatoire 3 appelée suite chiffrante, est combinée par la porte ou-exclusif 43 avec chaque bit de position correspondante d'un message en clair 45 envoyé par le premier terminal 37a pour obtenir un texte chiffré 47 qui est ensuite envoyé par le premier modem 41a à la seconde entité 33b. Ainsi, l'opération de chiffrement consiste à ajouter bit à bit une suite chiffrante 3 au texte clair du message 45 pour obtenir le texte chiffré 47.

Le second dispositif de codage 39b fait une opération de déchiffrement qui consiste à ajouter bit à bit cette même suite chiffrante 3 au texte chiffré 47 envoyé par la première entité 33a pour reformer le message au texte clair 45.

Ainsi, les opérations de chiffrement et de déchiffrement sont identiques.

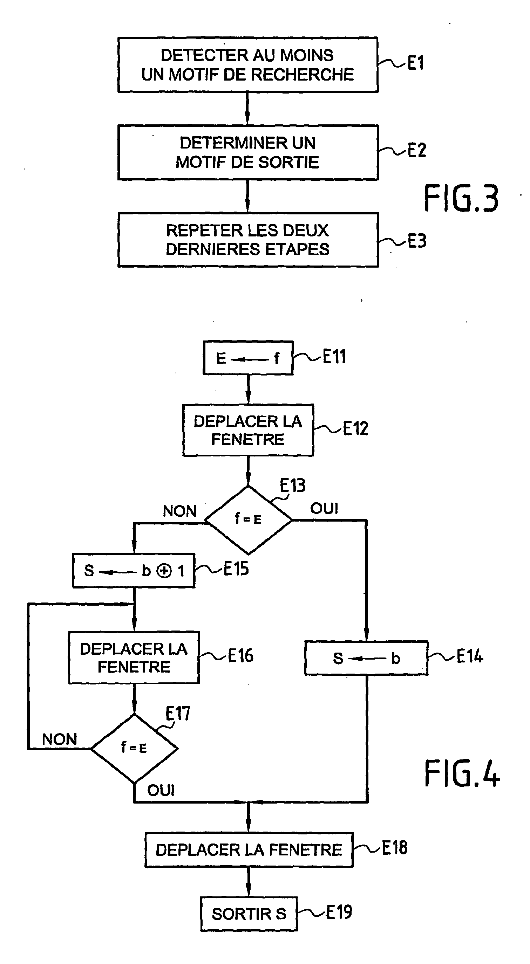

Les figures 3 à 5 illustrent le procédé de génération de données pseudo aléatoire selon l'invention.

Ce procédé consiste à générer la séquence de données pseudo aléatoire 3 à partir d'une procédure de recherche d'au moins un motif de recherche dans la séquence de données initiale 9.

Ainsi, la détermination des éléments de la séquence de données pseudo aléatoire selon l'invention dépend du motif recherché et de l'historique ou la manière dont la recherche a été réalisée.

La figure 3 illustre un exemple d'une procédure de recherche pour la génération de la séquence de données pseudo aléatoire 3 selon l'invention.

L'étape E1, concerne la détection d'au moins un motif de recherche 7 de 1 bit défini parmi un ensemble de motifs de recherche dans la séquence de données initiale 9.

L'étape E2, concerne la détermination d'un motif de sortie 25 de 1 bit, selon une opération qui dépend du déroulement de l'étape précédente E1.

En effet, la détermination du motif de sortie 25 dépend du motif de recherche 7 et de l'historique de la recherche, en particulier du nombre d'étapes ou d'itérations effectuées avant de trouver le motif de recherche 7 en question dans la séquence de données initiale 9.

Ces étapes de détection E1 du motif de recherche 7 et de détermination E2 du motif de sortie 25 sont effectuées par une suite d'opérations.

Cette suite d'opérations comporte un premier ensemble de règles implémentées par le premier moyen de contrôle 21 du générateur 1, permettant de définir au moins un mode de déplacement pour déplacer une fenêtre 19 sur la séquence de données initiale 9 pour détecter le ou les motifs de recherche 7.

D'une manière générale, une fenêtre 19 de taille non nulle, se déplace sur la séquence de données initiale 9. Au début de la procédure de recherche, la fenêtre 19 se trouve à une position initiale sur la séquence initiale 9 (par exemple, elle peut être au début de la séquence initiale 9). Le bit qui se trouve dans la fenêtre 19 va être utilisé pour déterminer le motif de sortie 25.

Le premier ensemble de règles peut définir le sens de déplacement, l'amplitude de déplacement, ou la forme de déplacement de la fenêtre 19, par exemple un déplacement cyclique sur une partie de la séquence de données initiale 9.

A titre d'exemple, le premier ensemble de règles peut comporter une règle r₁ définie de la manière suivante :
r₁ ="décaler d'un bit vers la droite".

En outre, la suite d'opérations comporte un second ensemble de règles implémentées par le second moyen de contrôle 27 du générateur 1, qui déterminent les conditions d'arrêt du déplacement de la fenêtre 19 sur la séquence de données Initiale 9.

Le second ensemble de règles peut comporter une pluralité de règles qui doivent être appliquées selon un ordre déterminé, avant que le générateur 1 délivre le motif de sortie 25. Ainsi, la délivrance par le générateur 1 d'une succession de motifs de sortie 25 permet de former la séquence de données pseudo aléatoire 3.

A titre d'exemple, le second ensemble de règles comporte une règle r₂ définie de la manière suivante :
r₂ ="tant que le contenu d'une fenêtre 19 n'est pas un motif de l'ensemble de motifs de recherche 7, déplacer la fenêtre 19 suivant la règle r₁", où r₁ est une règle du premier ensemble de règles.

En outre, une autre règle appartenant à ce second ensemble de règles, peut gérer une mise à jour de l'ensemble de motifs de recherche 7 et/ou du motif de sortie 25 selon une loi binaire donnée et en fonction du déplacement et/ou du contenu de la fenêtre 19.

Ainsi, le ou les motifs de recherche 7 dépendent du contenu de la fenêtre 19, ou des exécutions précédentes de la suite d'opérations comportant les premier et second ensembles de règles.

De même, le motif de sortie 25 peut dépendre du contenu de la fenêtre 19, ou encore dépendre des exécutions précédentes de la suite d'opérations comportant les premier et second ensembles de règles.

Par ailleurs, l'étape E3 de la procédure de recherche consiste à répéter les deux étapes précédentes E1 et E2 de manière successive pour former par concaténation la séquence de données pseudo aléatoire 3 à partir d'une succession de motifs de sortie 25.

On notera que, la suite d'opérations peut être répétée jusqu'à ce qu'une condition préalablement déterminée soit remplie. Cette condition peut être le contenu d'une fenêtre 19 de la séquence de données initiale 9, si celle-ci est finie. Il est aussi possible de répéter la suite d'opérations jusqu'à ce qu'une condition définie par l'utilisateur soit remplie.

Par ailleurs, afin d'améliorer encore la qualité de la séquence de données pseudo aléatoire 3, Il est possible de modifier la suite d'opérations après chaque exécution.

Ainsi, ce procédé consiste à parcourir un flux initial de bits (séquence de données initiale 9) à l'aide d'une fenêtre 19, de sorte que chaque bit de sortie de la séquence de données pseudo aléatoire 3 dépende d'au moins une recherche d'un ou plusieurs motifs 7 dans ce flux initial 9. De plus, les motifs 7 à chercher dépendent eux-mêmes du contenu et/ou du déplacement de la fenêtre 19.

Les figures 4 à 5 montrent des modes de réalisation particuliers du procédé selon l'invention.

Selon ces exemples, la suite d'opérations reste invariable après chaque exécution, la 19 est de "taille un" (c'est-à-dire que chaque fenêtre comporte 1 bit), l'ensemble de motifs de recherche contient au plus un motif de recherche 7, et les motifs de recherche 7 et de sortie 25 sont aussi de taille un.

En outre, l'amplitude de déplacement de la fenêtre 19 est égale à une unité, c'est-à-dire que chaque fenêtre 19 se déplace d'un bit à chaque itération, par exemple, du bit courant au bit suivant (c'est-à-dire de la gauche vers la droite).

Ainsi, chaque séquence de données initiale 9 peut être lue d'une manière continue, c'est-à-dire bit à bit, ce qui en fait des modes de réalisation très simples à implémenter.

On notera dans tout ce qui suit, la valeur du motif de recherche 7 par E, celle du motif de sortie 25 par s, et celle de la fenêtre 19 par f, f₁ et f₂.

Au départ, les motifs de recherche 7 et de sortie 25 sont initialisés en attribuant un bit vide à chacun d'eux, c'est-à-dire E ← φ et s ← φ, φ étant l'ensemble vide. De même, on définit des valeurs binaires ou constantes notées b, b₁ et b₂ qui restent fixes à chaque application de la suite d'opérations de ces modes de réalisations.

Selon l'invention, une seule fenêtre 19 se déplace sur la séquence de données initiale 9. Elle peut être initialement fixée sur le premier bit de la séquence de données initiale 9.

La suite d'opérations du premier mode de réalisation peut être définie de la manière suivante :
- poser comme unique règle du premier ensemble de règles, la règle n,ᵢ="décaler d'un bit vers la droite",
- poser comme règles du second ensemble de règles les règles suivantes :
   r_{2,1} ="mettre le bit fde la fenêtre dans le motif de recherche ( *E ← f* )", r_{2,2} ="déplacer la fenêtre une fois selon r_{1,1} ",
   r_{2,3} ="si le contenu de la fenêtre est égal au bit E du motif de recherche, alors mettre à jour le motif de sortie *s* ← *b* ",
   r_{2,4} ="si le contenu de la fenêtre n'est pas égal au bit E du motif de recherche, alors mettre à jour le motif de sortie s ← *b* ⊕ 1 ",
   r_{2,5}="tant que le contenu f de la fenêtre n'est pas un motif de recherche, déplacer la fenêtre selon la règle r_{1,1}",
   r_{2,6}="déplacer la fenêtre une fois selon r_{1,1}".
- appliquer dans l'ordre les règles r_{2,1}, r_{2,2}, r_{2,3},r_{2,4},r_{2,5} et r_{2,6}, et -sortir le motif s de sortie.

En effet, l'organigramme de la figure 4 montre le déroulement de la suite d'opérations ci-dessus.

L'étape E11 consiste à mettre le bit de la fenêtre 19 dans le motif de recherche 7.

L'étape E12 consiste à déplacer la fenêtre 19 d'un bit, du bit courant au bit suivant.

L'étape E13 est un test comparant le contenu de la fenêtre 19 à celui du motif de recherche 7.

L'étape E14 consiste à mettre à jour le motif de sortie 25 selon une première loi, si le contenu de la fenêtre 19 est égal à celui du motif de recherche 7. Selon cet exemple, la première loi correspond à l'attribution de la valeur déterminée b au motif de sortie 25 (*s* ← *b* ).

L'étape E15 consiste à mettre à jour le motif de sortie 25 selon une seconde loi, si le contenu de la fenêtre 19 n'est pas égal au bit du motif de recherche 7. Selon cet exemple, la seconde loi correspond à faire une addition modulo deux entre la valeur déterminée b et la valeur « 1 » et attribue le résultat de cette addition au motif de sortie 25 ( s ← *b* ⊕ 1 ).

Les étapes E16 et E17 forment une boucle qui consiste à déplacer la fenêtre 19 bit par bit vers les bits suivants tant que le contenu de la fenêtre 19 n'est pas égal au bit du motif de recherche 7.

L'étape E18 consiste à déplacer la fenêtre 19 d'un bit, du bit courant au bit suivant.

Finalement, l'étape E19 consiste à faire sortir du générateur 1 le motif de sortie.

Schématiquement, la suite d'opérations peut être résumée ainsi : on lit le bit E courant sur la séquence de données initiale 9, puis on se déplace vers la droite sur la séquence 9 jusqu'à trouver le bit E. Si on ne s'est déplacé que d'un indice pour retrouver E, alors on sort b, sinon on sort *b* ⊕ 1. On se déplace ensuite d'un bit. vers la droite avant de recommencer.

Bien entendu, l'organigramme peut comporter un test d'arrêt (non représenté sur la figure par soud de simplification) pour déterminer si une condition préalablement définie est remplie.

A titre d'exemple, ces étapes peuvent être répétées pour former la séquence de données pseudo aléatoire jusqu'à ce que la fenêtre 19 sorte de la séquence de données initiale 9.

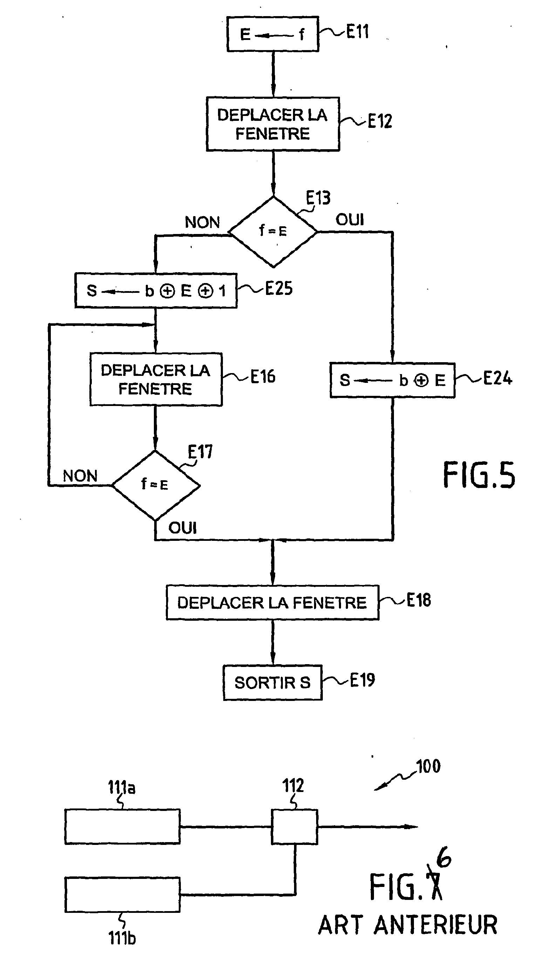

La figure 5 est un organigramme montrant le déroulement de la suite d'opérations d'un deuxième mode de réalisation.

L'organigramme de cette figure se distingue de celui de la figure 4 uniquement par les étapes E24 et E25.

En effet, à l'étape E24, la première loi correspond à faire une addition modulo deux entre la valeur déterminée b et la valeur E du motif de recherche 7 et attribue le résultat de cette addition au motif de sortie 25 (*s ← b* ⊕ *E*).

En revanche, à l'étape E25, la seconde loi correspond à faire une addition modulo deux entre la valeur déterminée b, la valeur E du motif de recherche 7, et la valeur « 1 » et attribue le résultat de cette addition au motif de sortie 25 (*s* ← *b* ⊕ *E* ⊕ 1).

Ainsi, la suite d'opérations du deuxième mode de réalisation peut être définie de la manière suivante :
- poser comme unique règle du premier ensemble de règles, la règle r_{1,1}="décaler d'un bit vers la droite",
- poser comme règles du second ensemble de règles les règles suivantes :
   r_{2,1} ="mettre le bit fde la fenêtre dans le motif de recherche ( *E* ← *f* )", r_{2,2} ="déplacer la fenêtre une fois selon r_{1,1} ",
   r_{2,3} ="si le contenu de la fenêtre, est égal au bit E du motif de recherche, alors mettre à jour le motif de sortie *s* ← *b* ⊕ *E* ",
   r_{2,4} ="si le contenu de la fenêtre n'est pas égal au bit E du motif de recherche, alors mettre à jour le motif de sortie *s* ← *b* ⊕ *E* ⊕ 1 ",
   r_{2,5}="tant que le contenu f de la fenêtre n'est pas un motif de recherche, déplacer la fenêtre selon la règle r_{1,1}",
   r_{2,6}="déplacer la fenêtre une fois selon r_{1,1}".
- appliquer dans l'ordre les règles r_{2,1}, r_{2,2} r_{2,3},r_{2,4},r_{2,5} et r_{2,6}, et
- sortir le motif de sortie *s*.

Schématiquement, la suite d'opérations du second mode de réalisation peut être résumé ainsi : on lit le bit E courant sur la séquence de données initiale 9, puis on se déplace vers la droite sur la séquence jusqu'à trouver le bit E. Si on ne s'est déplacé que d'un indice pour retrouver E, alors on sort *b* ⊕ *E,* sinon on sort *b* ⊕ *E* ⊕ 1. On se déplace ensuite d'un bit vers la droite avant de recommencer.

Ces modes de réalisation sont faciles à réaliser, De plus, leur rapport entre le nombre de bits sortis et le nombre de bits calculés est en moyenne 1/3 lorsque, par exemple, le moyen initial 11 donnant la séquence de données initiale 9 est un registre à décalage à rétroaction linéaire.

Ainsi, le procédé selon l'invention permet de créer une séquence de bits pseudo aléatoire de bonne qualité qui peut être utilisée pour le chiffrement symétrique du type chiffrement à flot.

En effet, chaque bit de la séquence de données pseudo aléatoire 3 peut être combiné avec un bit correspondant d'une séquence de données d'un message 45 à chiffrer par une addition modulo 2 pour former une séquence de donnée chiffrée 47 (voir figure 2).

## Revendications

1. Procédé de génération d'une séquence de données pseudo aléatoire (3), exécuté par un générateur (1) de séquence de données pseudo-aléatoire, ladite séquence de données pseudo aléatoire (3) étant utilisée comme suite chiffrante dans un procédé de chiffrement à flot et étant engendrée à partir d'une procédure de recherche d'au moins un motif de recherche (7) d'un bit dans une séquence de données initiale (9) de N bits en déplaçant une fenêtre (19) de taille un bit sur ladite séquence de données initiale (9), ladite fenêtre étant placée à une position initiale déterminée et ladite séquence de données initiale étant engendrée par un moyen comportant un registre à décalage à rétroaction linéaire, ladite procédure de recherche comportant les étapes suivantes :
- mettre (E11) le bit de la fenêtre dans un motif de recherche ;
- détecter (E12,E13) ledit motif de recherche (7) dans ladite séquence de données initiale (9) en déplaçant ladite fenêtre (19) sur ladite séquence de données initiale (9) ;
- déterminer (E14-E17) un motif de sortie (25) d'un bit selon une opération qui dépend du déroulement de l'étape précédente, ledit motif de sortie étant déterminé :
○ selon une première loi (E14), si la fenêtre est déplacée une seule fois avant de détecter le motif de recherche dans la séquence de données initiale, ladite première loi attribuant une valeur dite de sortie au motif de sortie ; et
○ selon une seconde loi (E15) sinon, ladite seconde loi attribuant au motif de sortie le résultat de l'addition modulo deux entre la valeur dite de sortie et la valeur 1 ;
- déplacer (E18) la fenêtre d'un bit, du bit courant au bit suivant ; et
- répéter les étapes précédentes de manière successive pour former la séquence de données pseudo aléatoire (3) par concaténation des motifs de sortie (25).

2. Procédé selon la revendication 1 **caractérisé en ce que** la valeur dite de sortie est égale :
- à une valeur déterminée ; ou
- au résultat de l'addition modulo deux entre une valeur déterminée et le motif de recherche.

3. Procédé selon la revendication 1 ou 2, **caractérisé en ce que** les étapes de détection (E1) dudit motif de recherche (7) et de détermination (E2) dudit motif de sortie (25) sont effectuées par une suite d'opérations comportant un premier ensemble de règles permettant de définir au moins un mode de déplacement pour déplacer la fenêtre (19) sur ladite séquence de données initiale (9) pour détecter ledit au moins un motif de recherche (7).

4. Procédé selon la revendication 3, **caractérisé en ce que** la suite d'opérations comporte en outre un second ensemble de règles qui déterminent les conditions d'arrêt du déplacement de ladite fenêtre (19) sur ladite séquence de données initiale (9).

5. Procédé selon la revendication 4, **caractérisé en ce qu'**au moins une des règles dudit second ensemble de règles gère une mise à jour du motif de recherche et/ou dudit motif de sortie, en fonction du déplacement et/ou du contenu de ladite fenêtre.

6. Procédé selon l'une quelconque des revendications 3 et 4, **caractérisé en ce que** la suite d'opérations est répétée jusqu'à ce qu'une condition préalablement déterminée soit remplie.

7. Procédé selon l'une quelconque des revendications 3 et 4, **caractérisé en ce que** la suite d'opérations est modifiée après chaque exécution.

8. Procédé selon l'une quelconque des revendications 3 et 4, **caractérisé en ce que** la suite d'opérations reste invariable après chaque exécution.

9. Procédé selon l'une quelconque des revendications 1 à 8, **caractérisé en ce que** chaque bit de ladite séquence de données pseudo aléatoire est combiné avec un bit correspondant d'une séquence de données d'un message à chiffrer par une addition modulo 2 pour former une séquence de donnée chiffrée.

10. Dispositif de codage (39) comportant un générateur d'une séquence de données pseudo aléatoire (3), ledit dispositif de codage étant adapté à réaliser un chiffrement à flot utilisant la séquence de données pseudo-aléatoire générée comme suite chiffrante, ledit générateur comportant un moyen initial (11) pour engendrer une séquence de données initiale de N bits comprenant un registre à décalage à rétroaction linéaire, et un moyen de recherche (5) pour rechercher au moins un motif de recherche (7) d'un bit dans la séquence de données initiale (9) de N bits, en déplaçant une fenêtre de taille un bit d'un moyen de détection du moyen de recherche sur ladite séquence de données initiale, ladite fenêtre étant placée à une position initiale déterminée, ledit moyen de recherche (5) comportant en outre un moyen de détermination (15) et un moyen de répétition (17), et étant tel que :
- le moyen de détermination (15) est apte à mettre le bit de la fenêtre dans un motif de recherche ;
- le moyen de détection (13) est apte à détecter le motif de recherche (7) dans ladite séquence de données initiale (9) en déplaçant ladite fenêtre sur ladite séquence de données initiale ;
- le moyen de détermination (15) est apte à déterminer un motif de sortie (25) d'un bit selon une opération qui dépend du déroulement de la détection dudit au moins un motif de recherche (7), ledit motif de sortie étant déterminé :
○ selon une première loi, si la fenêtre est déplacée une seule fois avant de détecter ledit au moins un motif de recherche dans la séquence de données initiale, ladite première loi attribuant une valeur dite de sortie au motif de sortie ; et
○ selon une seconde loi sinon, ladite seconde loi attribuant au motif de sortie le résultat de l'addition modulo deux entre la valeur dite de sortie et la valeur 1 ;
- le moyen de détection est apte à déplacer la fenêtre d'un bit, du bit courant au bit suivant ; et
- le moyen de répétition (17) est apte à générer la séquence de données pseudo aléatoire (3) par concaténation des motifs de sortie (25).

11. Dispositif de codage selon la revendication 10 **caractérisé en ce que** la valeur dite de sortie est égale :
- à une valeur déterminée ; ou
- au résultat de l'addition modulo deux entre une valeur déterminée et le motif de recherche.

12. Dispositif de codage selon la revendication 10 ou 11, **caractérisé en ce que** le moyen de détection (13) comporte un premier moyen de contrôle (21) pour contrôler le déplacement de ladite fenêtre sur ladite séquence de données initiale.

13. Dispositif de codage selon la revendication 12, **caractérisé en ce que** le moyen de détermination (15) comporte un second moyen de contrôle (27) pour mettre à jour ledit motif de recherche et/ou ledit motif de sortie.

14. Dispositif de codage (39) selon l'une quelconque des revendications 10 à 13 comportant en outre une porte logique ou-exclusif (43).

15. Système sécurisé comportant au moins deux entités (33a, 33b) **caractérisé en ce que** chacune desdites au moins deux entités (33a, 33b) comporte un dispositif de codage (39a, 39b) selon la revendication 14.

## Claims

1. Method for generating a pseudo-random data sequence (3), executed by a pseudo-random data sequence generator (1), said pseudo-random data sequence (3) being used as a keystream in a stream cipher method and being created from a search procedure of at least one search pattern (7) for a bit in an initial data sequence (9) of N bits by moving a window (19) with a size of one bit over said initial data sequence (9), said window being placed in an initial determined position and said initial data sequence being created by a means comprising a linear feedback shift register, said search procedure comprising the following steps:
- placing (E11) the bit of the window in a search pattern;
- detecting (E12, E13) said search pattern (7) in said initial data sequence (9) by moving said window (19) over said initial data sequence (9);
- determining (E14-E17) an output pattern (25) of a bit according to an operation which depends on the execution of the previous step, said output pattern being determined:
○ according to a first law (E14), if the window is moved only once before detecting the search pattern in the initial data sequence, said first law attributing a value called the output value to the output pattern; and
○ according to a second law (E15) otherwise, said second law attributing to the output pattern the result of the modulo two addition between the value called the output value and the value 1;
- moving (E18) the window by one bit, from the current bit to the next bit; and
- repeating the preceding steps successively in order to form the pseudo-random data sequence (3) by concatenation of the output patterns (25).

2. Method according to Claim 1, **characterized in that** the value called the output value is equal:
- to a determined value; or
- to the result of the modulo two addition between a determined value and the search pattern.

3. Method according to Claim 1 or 2, **characterized in that** the steps of detecting (E1) said search pattern (7) and of determining (E2) said output pattern (25) are carried out by a suite of operations comprising a first set of rules making it possible to define at least one movement mode for moving the window (19) over said initial data sequence (9) in order to detect said at least one search pattern (7).

4. Method according to Claim 3, **characterized in that** the suite of operations also comprises a second set of rules which determine the conditions for stopping the movement of said window (19) over said initial data sequence (9).

5. Method according to Claim 4, **characterized in that** at least one of the rules of said second set of rules manages an update of the search pattern and/or of said output pattern, according to the movement and/or the content of said window.

6. Method according to either one of Claims 3 and 4, **characterized in that** the suite of operations is repeated until a previously determined condition is fulfilled.

7. Method according to either one of Claims 3 and 4, **characterized in that** the suite of operations is modified after each execution.

8. Method according to either one of Claims 3 and 4, **characterized in that** the suite of operations remains invariable after each execution.

9. Method according to any one of Claims 1 to 8, **characterized in that** each bit of said pseudo-random data sequence is combined with a bit corresponding to a data sequence of a message to be encrypted by a modulo 2 addition in order to form an encrypted data sequence.

10. Encoding device (39) comprising a generator of a pseudo-random data sequence (3), said encoding device being suitable for producing a stream cipher using the pseudo-random data sequence generated as a keystream, said generator comprising an initial means (11) for creating an initial data sequence of N bits comprising a linear feedback shift register, and a search means (5) for searching for at least one search pattern (7) of a bit in the initial data sequence (9) of N bits, by moving a window with a size of one bit of a detection means of the search means over said initial data sequence, said window being placed in a determined initial position, said search means (5) also comprising a determination means (15) and a repetition means (17), and being such that:
- the determination means (15) is capable of placing the bit of the window in a search pattern;
- the detection means (13) is capable of detecting the search pattern (7) in said initial data sequence (9) by moving said window over said initial data sequence;
- the determination means (15) is capable of determining an output pattern (25) of a bit according to an operation which depends on the execution of the detection of said at least one search pattern (7), said output pattern being determined:
○ according to a first law, if the window is moved only once before detecting said at least one search pattern in the initial data sequence, said first law attributing a value called the output value to the output pattern; and
○ according to a second law otherwise, said second law attributing to the output pattern the result of the modulo two addition between the value called the output value and the value 1;
- the detection means is capable of moving the window by one bit, from the current bit to the next bit; and
- the repetition means (17) is capable of generating the pseudo-random data sequence (3) by concatenation of the output patterns (25).

11. Encoding device according to Claim 10, **characterized in that** the value called the output value is equal:
- to a determined value; or
- to the result of the modulo two addition between a determined value and the search pattern.

12. Encoding device according to Claim 10 or 11, **characterized in that** the detection means (13) comprises a first control means (21) for controlling the movement of said window over said initial data sequence.

13. Encoding device according to Claim 12, **characterized in that** the determination means (15) comprises a second control means (27) for updating said search pattern and/or said output pattern.

14. Encoding device (39) according to any one of Claims 10 to 13, also comprising an exclusive-OR logic gate (43).

15. Secure system comprising at least two entities (33a, 33b), **characterized in that** each of said at least two entities (33a, 33b) comprises an encoding device (39a, 39b) according to Claim 14.

## Patentansprüche

1. Verfahren zur Erzeugung einer Pseudozufalls-Datensequenz (3), das von einem Pseudozufalls-Datensequenz-Generator (1) ausgeführt wird, wobei die Pseudozufalls-Datensequenz (3) als Verschlüsselungsfolge in einem Stromverschlüsselungsverfahren verwendet und ausgehend von einer Suchprozedur mindestens eines Suchmusters (7) von einem Bit in einer Anfangsdatensequenz (9) von N Bits erzeugt wird, indem ein Fenster (19) von der Größe eines Bits auf der Anfangsdatensequenz (9) verschoben wird, wobei das Fenster in einer bestimmten Anfangsposition platziert wird und die Anfangsdatensequenz durch eine Einrichtung erzeugt wird, die ein linearen Schieberegister mit Rückkopplung aufweist, wobei die Suchprozedur die folgenden Schritte aufweist:
- Einsetzen (E11) des Bits des Fensters in ein Suchmuster;
- Erfassung (E12, E13) des Suchmusters (7) in der Anfangsdatensequenz (9), indem das Fenster (19) auf der Anfangsdatensequenz (9) verschoben wird;
- Bestimmung (E14-E17) eines Ausgangsmusters (25) von einem Bit gemäß einem Vorgang, der vom Ablauf des vorhergehenden Schritts abhängt, wobei das Ausgangsmuster bestimmt wird:
○ gemäß einem ersten Gesetz (E14), wenn das Fenster nur einmal verschoben wird, ehe das Suchmuster in der Anfangsdatensequenz erfasst wird, wobei das erste Gesetz dem Ausgangsmuster einen so genannten Ausgangswert zuweist; und
○ ansonsten gemäß einem zweiten Gesetz (E15), wobei das zweite Gesetz dem Ausgangsmuster das Ergebnis der Modulo-2-Addition zwischen dem so genannten Ausgangswert und dem Wert 1 zuweist;
- Verschiebung (E18) des Fensters um ein Bit vom laufenden Bit zum folgenden Bit; und
- aufeinanderfolgende Wiederholung der vorhergehenden Schritte, um die Pseudozufalls-Datensequenz (3) durch Verkettung der Ausgangsmuster (25) zu formen.

2. Verfahren nach Anspruch 1, **dadurch gekennzeichnet, dass** der so genannte Ausgangswert ist gleich:
- einem bestimmten Wert; oder
- dem Ergebnis der Modulo-2-Addition zwischen einem bestimmten Wert und dem Suchmuster,

3. Verfahren nach Anspruch 1 oder 2, **dadurch gekennzeichnet, dass** die Schritte der Erfassung (E1) des Suchmusters (7) und der Bestimmung (E2) des Ausgangsmusters (25) durch eine Folge von Vorgängen durchgeführt werden, die einen ersten Satz von Regeln enthalten, welche es ermöglichen, mindestens eine Verschiebungsart zum Verschieben des Fensters (19) auf der Anfangsdatensequenz (9) zu definieren, um das mindestens eine Suchmuster (7) zu erfassen.

4. Verfahren nach Anspruch 3, **dadurch gekennzeichnet, dass** die Folge von Vorgängen außerdem einen zweiten Satz von Regeln aufweist, die die Bedingungen des Beendens der Verschiebung des Fensters (19) auf der Anfangsdatensequenz (9) bestimmen.

5. Verfahren nach Anspruch 4, **dadurch gekennzeichnet, dass** mindestens eine der Regeln des zweiten Satzes von Regeln eine Aktualisierung des Suchmusters und/oder des Ausgangsmusters in Abhängigkeit von der Verschiebung und/oder vom Inhalt des Fensters verwaltet.

6. Verfahren nach einem der Ansprüche 3 und 4, **dadurch gekennzeichnet, dass** die Folge von Vorgängen wiederholt wird, bis eine vorab bestimmte Bedingung erfüllt ist.

7. Verfahren nach einem der Ansprüche 3 und 4, **dadurch gekennzeichnet, dass** die Folge von Vorgängen nach jeder Ausführung verändert wird.

8. Verfahren nach einem der Ansprüche 3 und 4, **dadurch gekennzeichnet, dass** die Folge von Vorgängen nach jeder Ausführung unverändert bleibt.

9. Verfahren nach einem der Ansprüche 1 bis 8, **dadurch gekennzeichnet, dass** jedes Bit der Pseudozufalls-Datensequenz mit einem entsprechenden Bit einer Datensequenz einer zu verschlüsselnden Mitteilung durch eine Modulo-2-Addition kombiniert wird, um eine verschlüsselte Datensequenz zu bilden.

10. Codiervorrichtung (39), die einen Pseudozufalls-Datensequenz-Generator (3) aufweist, wobei die Codiervorrichtung geeignet ist, um eine Stromverschlüsselung unter Verwendung der erzeugten Pseudozufalls-Datensequenz als Verschlüsselungsfolge durchzuführen, wobei der Generator eine Anfangseinrichtung (11), um eine Anfangsdatensequenz von N Bits zu erzeugen, die ein lineares Schieberegister mit Rückkopplung enthält, und eine Sucheinrichtung (5) aufweist, um mindestens ein Suchmuster (7) von einem Bit in der Anfangsdatensequenz (9) von N Bits zu suchen, indem ein Fenster der Größe von einem Bit einer Erfassungseinrichtung der Sucheinrichtung auf der Anfangsdatensequenz verschoben wird, wobei das Fenster in einer bestimmten Anfangsstellung platziert wird, wobei die Sucheinrichtung (5) außerdem eine Bestimmungseinrichtung (15) und eine Wiederholungseinrichtung (17) aufweist, und derart ist, dass:
- die Bestimmungseinrichtung (15) das Bit des Fensters in ein Suchmuster einsetzen kann;
- die Erfassungseinrichtung (13) das Suchmuster (7) in der Anfangsdatensequenz (9) erfassen kann, indem sie das Fenster auf der Anfangsdatensequenz verschiebt;
- die Bestimmungseinrichtung (15) ein Ausgangsmuster (25) von einem Bit gemäß einem Vorgang bestimmen kann, der vom Ablauf der Erfassung des mindestens einen Suchmusters (7) abhängt, wobei das Ausgangsmuster bestimmt wird:
○ gemäß einem ersten Gesetz, wenn das Fenster nur einmal verschoben wird, ehe das mindestens eine Suchmuster in der Anfangsdatensequenz erfasst wird, wobei das erste Gesetz dem Ausgangsmuster einen so genannten Ausgangswert zuweist; und
○ ansonsten gemäß einem zweiten Gesetz, wobei das zweite Gesetz dem Ausgangsmuster das Ergebnis der Modulo-2-Addition zwischen dem so genannten Ausgangswert und dem Wert 1 zuweist;
- die Erfassungseinrichtung das Fenster um ein Bit vom laufenden Bit zum folgenden Bit verschieben kann; und
- die Wiederholungseinrichtung (17) die Pseudozufalls-Datensequenz (3) durch Verkettung der Ausgangsmuster (25) erzeugen kann.

11. Codiervorrichtung nach Anspruch 10, **dadurch gekennzeichnet, dass** der so genannte Ausgangswert ist gleich:
- einem bestimmten Wert; oder
- dem Ergebnis der Modulo-2-Addition zwischen einem bestimmten Wert und dem Suchmuster.

12. Codiervorrichtung nach Anspruch 10 oder 11, **dadurch gekennzeichnet, dass** die Erfassungseinrichtung (13) eine erste Steuereinrichtung (21) aufweist, um die Verschiebung des Fensters auf der Anfangsdatensequenz zu steuern.

13. Codiervorrichtung nach Anspruch 12, **dadurch gekennzeichnet, dass** die Bestimmungseinrichtung (15) eine zweite Steuereinrichtung (27) aufweist, um das Suchmuster und/oder das Ausgangsmuster zu aktualisieren.

14. Codiervorrichtung (39) nach einem der Ansprüche 10 bis 13, die außerdem ein Exklusiv-ODER-Logikglied (43) aufweist.

15. Gesichertes System, das mindestens zwei Entitäten (33a, 33b) aufweist, **dadurch gekennzeichnet, dass** jede der mindestens zwei Entitäten (33a, 33b) eine Codiervorrichtung (39a, 39b) nach Anspruch 14 aufweist.
